# EUROPÄISCHE PATENTSCHRIFT

(11) **EP 2 024 682 B1**
(45) Veröffentlichungstag und Bekanntmachung des Hinweises auf die Patenterteilung: **03.10.2018**
(21) Anmeldenummer: 07725507.3
(22) Anmeldetag: 24.05.2007
(51) Int. Cl.: F23G 5/50, F23C 9/00

(54) **VERFAHREN ZUR VERBESSERUNG DER SCHLACKEQUALITÄT VON ROSTFEUERUNGSANLAGEN**
METHOD FOR THE IMPROVEMENT OF THE SLAG QUALITY IN GRATE FURNACES
PROCÉDÉ POUR AMÉLIORER LA QUALITÉ DES SCORIES DE FOYERS À GRILLE

(30) Priorität: 07.06.2006 DE 102006026434
(43) Veröffentlichungstag der Anmeldung: 18.02.2009
(73) Patentinhaber: Karlsruher Institut für Technologie, 76131 Karlsruhe (DE)
(72) Erfinder: HUNSINGER, Hans, 76356 Weingarten (DE); GERIG, Andreas, 76185 Karlsruhe (DE); HÄFELE, Gerhard, 75053 Gondelsheim (DE)
(74) Vertreter: Weddigen, Andreas
(86) Internationale Anmeldenummer: PCT/EP2007/004607
(87) Internationale Veröffentlichungsnummer: WO 2007/140885

(56) Entgegenhaltungen:
- EP-A- 0 941 777
- WO-A-00/03179
- DE-A1- 4 402 172
- DE-A1- 19 728 545
- DE-A1- 19 961 384
- DE-A1-102004 050 098
- JP-A- 1 286 943
- US-B1- 6 655 304

## Beschreibung

Die Erfindung betrifft ein Verfahren zur Verbesserung der Schlackequalität von Rostfeuerungsanlagen wie z.B. Abfallverbrennungsanlagen gemäß des ersten Patentanspruchs.

Der Abbrand fester Brennstoffe wie Abfall, Biomasse oder Kohle auf Verbrennungsrösten kann idealisiert in die nacheinander ablaufenden Teilprozesse Trocknung, Entgasung der flüchtigen Bestandteile, Abbrand des Restkohlenstoffes sowie Sinterung der Rostasche gegliedert werden. In realen Rostfeuerungsanlagen ist jedoch die Vermischung des Brennstoffs insbesondere bei Vorschubrosten sehr schlecht, wodurch sich die Teilprozesse über der Rostlänge überlagern.

Der brennbare Brennstoffanteil konzentriert sich überwiegend in den flüchtigen Bestandteilen, die nach der Trocknung freigesetzt werden. Diese bei der Entgasung freigesetzten heizwertreichen Gase verbrennen teilweise, abhängig vom lokal zur Verfügung stehenden Sauerstoff, überwiegend oberhalb des Brennbettes wodurch die örtliche Abgastemperatur stark ansteigt. Der im Brennbett verbleibende fixe Kohlenstoff beträgt nur einen kleinen Anteil des gesamten Kohlenstoffinventars benötigt aber wesentlich mehr Zeit zum Ausbrand. Daher nimmt der Bereich für den Restkohlenstoffabbrand einen überproportional großen Bereich des Rostes ein. Eine Erhöhung der Abbrandgeschwindigkeit des fixen Kohlenstoffs durch Erhöhung der Temperatur im Bereich der Schlackeausbrandzone ermöglicht generell neben einer Verbesserung der Schlackequalität auch eine Steigerung des Brennstoffdurchsatzes. Beide Effekte haben erhebliche ökonomische Bedeutung.

Die Schlacke wird in der Regel als gebrochenes Granulat als Bauzuschlagstoff verwendet. Ziel einer Verbesserung der Schlackequalität liegt deswegen in einem möglichst vollständigen Kohlenstoffausbrand, Sintern und/oder Aufschmelzen der Verbrennungsrückstände entweder in einer noch im Brennbett oder der Verbrennung nachgeschalteten thermischen Nachbehandlung, aber auch in der Erzielung eines geringen Schadstoffgehalts (z.B. PCDD/F).

Aus der DE 199 61 384 A1 ist ein Verfahren zur thermischen Behandlung von Rostasche aus Müllverbrennungsanlagen bekannt, bei dem die Rostasche im Anschluss an die Verbrennung in ein Drehrohr geleitet und dort mittels eines weiteren Brennstoffs unter Sauerstoffzufuhr thermisch behandelt wird.
DE 102 13 788 A1 offenbart dagegen ein Verfahren zur Beeinflussung von Verbrennungsrückständen aus einer Abfallverbrennungsanlage ohne einen nachgeschalteten Verfahrensschritt in einer separaten Vorrichtung. Der Sinter- und/oder Schmelzvorgang der Schlacke erfolgt bei diesem Verfahren noch im Brennbett der Hauptverbrennungszone, wobei die nicht gesinterten oder geschmolzenen Verbrennungsrückstände nach Durchlauf des Brennbetts erneut in den Verbrennungsvorgang rezykliert werden.

EP941777A beschreibt ein Verfahren gemäß dem Oberbegriff des Anspruchs 1.

Jeder zusätzliche Verfahrenschritt, auch wenn er eine Rezyklierung von Bestandteilen ohne eine zusätzliche Prozesskammer beinhaltet, bedeutet jedoch einen erheblichen Aufwand, der sich direkt in die Wirtschaftlichkeit einer Verbrennungsanlage einrechnet. Dies gilt insbesondere bei einer zusätzlichen Schlackebehandlung mit einer zusätzlichen teuren Sauerstoffanreicherung >21 Vol.%. Hohe Temperaturen sind aber Grundvoraussetzung für eine Schlackeoptimierung. Zwar begünstigt eine Sauerstoffanreicherung der Verbrennungsluft hohe Temperaturniveaus, aber im Wesentlichen nur im Gasraum oberhalb der Festbettausbrandzone und nicht innerhalb des gesamten Brennbettes, was für die Qualität der Schlacke entscheidend ist.
Ausgehend davon liegt die **Aufgabe der Erfindung** darin, ein einfaches und zuverlässig kontrollierbares Verfahren zur Verbesserung der Schlackequalität bei der Abfallverbrennung, beispielsweise Rostfeuerungen vorzuschlagen, bei dem eine gute Schlackequalität bereits während der Festbettverbrennung auf dem Rost erreicht wird. Hierbei ist von besonderer Bedeutung, dass durch das Verfahren keine Bildung von anderen Schadstoffen wie z.B. NOₓ und/oder keine signifikante Minderung bei der energetischen Nutzung des Wärmeinhaltes der Verbrennungsabgase eintritt.

Die Aufgabe wird mit einem Verfahren mit den Merkmalen des ersten Patentanspruchs gelöst. Vorteilhafte Ausgestaltungen des Verfahrens finden sich in den Unteransprüchen wieder.

Die Lösung der Aufgabe basiert auf einem Verbrennungsprozess gemäß dem Gegenstand des Anspruchs 1.

Ein wesentliches Merkmal der Lösung umfasst die gezielte Aufheizung des Brennbetts (d.h. des festen Brennstoffs mit der sich ggf. bereits gebildeten Schlacke und Asche) auf dem Verbrennungsrost im Bereich mindestens einer Festbettausbrandzone durch rezyklieren von Verbrennungsgasen aus der Brennkammer über mindestens einer dieser Festbettausbrandzonen. Heiße Brenngasteilströme werden direkt aus der Brennkammer über mindestens einer Festbettausbrandzone abgezweigt und durch das Brennbett mindestens einer nachfolgenden, vorzugsweise der letzten Festbettausbrandzone hindurchgeleitet. Dabei wird die durch eine Verbrennung in der Brennkammer hervorgerufene hohe Temperatur des Brenngases in vorteilhafter Weise für eine zusätzliche Temperaturerhöhung im dem Brennbett in den vorgenannten nachfolgenden, d.h. vorzugsweise mindestens einer der letzten Festbettausbrandzonen ausgenutzt.
Wie eingangs genannt, durchläuft ein Brennstoff während einer Verbrennung auf einer Rostfeuerungsanlage sämtliche Festbettausbrandzonen nacheinander, wobei es mit dem Durchlauf in den vorderen (ersten) Festbettausbrandzonen zu einem zunehmenden Abbrand der brennbaren Anteile des Brennstoffs unter Bildung Asche und Schlackebestandteilen kommt. In den diesen nachfolgenden, vorzugsweise letzten Festbettausbrandzonen kumulieren dann diese Schlackebestandteile, wobei sich dort aufgrund der bereits weitgehend erfolgten Ausbrandes des Feststoffes und durch das in dieser Rostzone zugeführte kalte Primärgases grundsätzlich ein niedriges Temperaturniveau einstellt. Durch die vorgenannte Umlenkung von heißem Verbrennungsgas aus der vorgenannten Verbrennung durch die nachfolgenden, vorzugsweise einer der letzten Festbettausbrandzonen werden dort die Schlackebestandteile gezielt erhitzt und so eine Sinterung zu einer Schlacke mit verbesserter Qualität ermöglicht. Die Schlacke verlässt so bereits als gesintertes Endprodukt mit verbesserter Qualität die Festbettausbrandzone. Thermische Nachbehandlungen sind nicht mehr zwingend erforderlich. Auch ist eine Zuführung von teurem Sauerstoff für eine Sinterung der Schlacke nicht mehr notwendig.

Die Erfindung wird im Folgenden anhand von Figuren näher erläutert. Es zeigen
**Fig.1** eine prinzipielle Darstellung eines Brennbetts einer Rostfeuerungsanlage mit beispielhaft vier Festbettausbrandzonen,
**Fig.2** typische verschiedene an einer Müllverbrennungsanlage (TAMARA) gemessene axiale Temperaturverläufe sowie die Sauerstoffkonzentration oberhalb des Brennbetts und den Kohlenstoffabbrand, aufgetragen über die Festbettausbrandzonen gemäß **Fig.1****,**
**Fig.3** eine prinzipielle Darstellung einer zweistufigen Verbrennungsanlage mit einer schematisch dargestellten Umlenkung von Verbrennungsgasanteilen durch die letzte Festbettausbrandzone,
**Fig.4a** **und b** die Rosttemperaturen und Rauchgastemperaturen von verschiedenen Versuchen, aufgetragen über die Festbettausbrandzonen,
**Fig.5a** **und b** die Konzentrationen an unverbranntem Restkohlenstoff und Chlorid in der Schlacke für die in **Fig.4a** **und b** dargestellten Versuche sowie
**Fig.6** die gemessenen Toxizitätsäquivalente (TEq) der im Rahmen der Versuche gemäß **Fig.4** **und** **5** gewonnenen Schlacke.

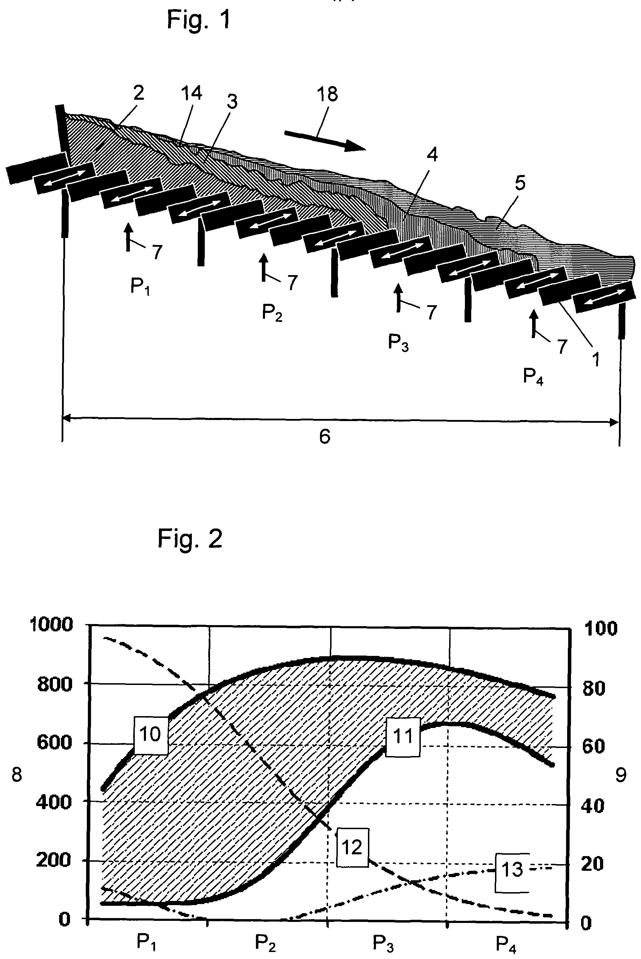

Das Brennbett einer herkömmlichen Rostfeuerungsanlage, wie es in **Fig.1** dargestellt ist, umfasst ein Verbrennungsrost **1** mit vier Festbettausbrandzonen **P₁** bis **P₄,** die von einem Festbrennstoff (Brennbett **14**) während einer Verbrennung nacheinander durchlaufen werden. Dabei durchläuft der Abbrand des Festbrennstoffs auf dem Verbrennungsrost idealisiert betrachtet die folgenden Teilprozesse: Trocknung **2,** Entgasung **3** der flüchtigen Müllbestandteile, Abbrand **4** des Restkohlenstoffes und Sinterung der Rostasche **5.** In realen Anlagen ist die Vermischung insbesondere bei Vorschubrosten sehr schlecht. Daher überlagern sich diese Teilprozesse über der Rostlänge **6.** Der Abbrand des Feststoffes erfolgt im Wesentlichen von der Brennbettoberfläche in Richtung Verbrennungsrost. Diese Charakteristik verursacht ein ausgeprägtes vertikales Temperaturprofil über der Brennbettdicke. Üblicherweise erfolgt während einer Verbrennung von unten durch alle Festbettausbrandzonen des Verbrennungsrosts **1** eine sauerstoffhaltige Primärgaszufuhr **7.**

Der brennbare Anteil des Festbrennstoffs konzentriert sich überwiegend bei den flüchtigen Bestandteilen, die bei der Entgasung **3** nach der Trocknung **2** freigesetzt werden. Diese bei der Entgasung freigesetzten heizwertreichen Gase verbrennen teilweise, abhängig vom dem lokal über die Primärgaszufuhr zur Verfügung gestellten Sauerstoff, zum überwiegenden Teil oberhalb des Brennbettes, wodurch die örtliche Abgastemperatur stark ansteigt.

Der im Brennbett nach der Entgasung verbleibende fixe Kohlenstoff, der sog. Restkohlenstoff umfasst nur einen sehr geringen Anteil des gesamten Kohlenstoffinventars, benötigt aber wesentlich mehr Zeit für einen Ausbrand. Daher nimmt der Bereich für den Restkohlenstoffabbrand einen überproportional großen Bereich des Verbrennungsrostes ein. Eine Erhöhung der Abbrandgeschwindigkeit des fixen Kohlenstoffs durch Temperaturerhöhung ermöglicht generell neben einer Verbesserung der Schlackequalität (niedrige Cl-, TOC- und PCDD/F-Konzentrationen) auch eine Steigerung des Brennstoffdurchsatzes.

Die Kinetik der Verbrennung des Restkohlenstoffes hängt insbesondere von der lokalen Temperatur im Brennbett und vom Sauerstoffangebot in der letzten Festbettausbrandzone ab. Dieser Sachverhalt zeigt sich bei der unterschiedlichen Lage der Temperaturmaxima im Verbrennungsrost verglichen mit dem Temperaturprofil im Abgas oberhalb des Brennbettes.

**Fig.2** zeigt typische an einer Müllverbrennungsanlage (TAMARA im Forschungszentrum Karlsruhe) gemessene axiale Temperaturverläufe **8** in °C sowie ermittelte Konzentrationen **9** in % für den Kohlenstoffabbrand **12** des Brennbetts sowie in Vol.% für die Sauerstoffkonzentration **13** oberhalb des Brennbetts, aufgetragen über die vier Festbettausbrandzonen **P₁** bis **P₄** einer Brennkammer. Der dabei verbrannte Festbrennstoff setzte sich aus 29% Wasser, 39% flüchtige Bestandteile, 5% Restkohlenstoff und 27% Asche zusammen und repräsentiert damit eine typische Zusammensetzung von Hausmüll. Zwischen den Temperaturverläufen oberhalb des Brennbetts **10** und direkt an der Rostoberfläche **11** (untere Grenze der Brennstoff bzw. Ascheschicht mittels Thermoelementen gemessen) zeigt sich ein teilweise erheblicher Temperaturgradient zwischen den Werten. Insbesondere in den ersten beiden Festbettausbrandzonen **P₁** und **P₂** zeigte sich bereits eine hohe Abgastemperatur, während die Temperatur im Brennbett noch infolge von der anfänglichen Trocknung **2** und Entgasung **3** des Festbrennstoffs niedrig gehalten wird. Dabei ist zu berücksichtigen, dass Brennstoff und Schlacke auf dem Verbrennungsrost nur eine sehr geringe Wärmeleitfähigkeit aufweisen und insbesondere bei Vorschubrösten (vgl. **Fig.1**) über die Brennstoffschichtdicke (Brennbettdicke) nur unzureichend vertikal vermischt werden. Die Strahlungswärme aus der Brennkammer auf den Brennstoff (Brennbett) wirkt nur auf die obere Schicht des Brennbettes, sodass diese für eine Sinterung über die gesamte Dicke der Schlackeschicht auf dem Verbrennungsrost zwecks dessen Optimierung nur sehr begrenzt zur Verfügung steht.

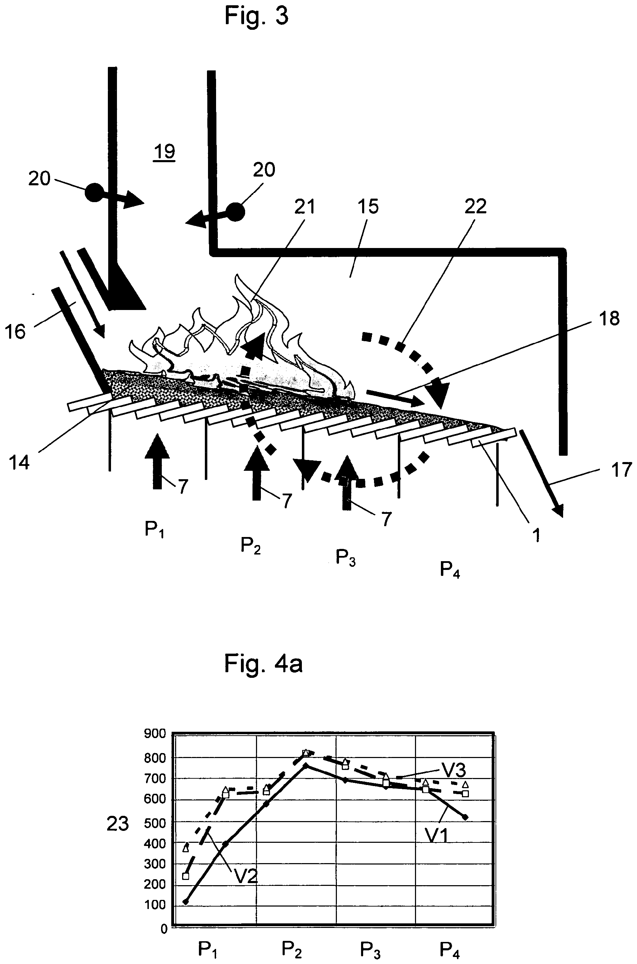

Ferner zeigt **Fig.2** die Abbrandkurve des gesamt Kohlenstoffgehaltes **12** im Brennbett sowie die Sauerstoffkonzentration **13** oberhalb des Brennbetts. Die Hauptverbrennungszone (Festbettausbrandzone **P₂**) kennzeichnet sich durch eine hohe lokale Kohlenstoffabbrandrate, folglich auch durch einen großen Sauerstoffverbrauch, was sich in O₂ Minimum der Sauerstoffkonzentration **13** zeigt. Die Freisetzung an den heizwertreichen flüchtigen Bestandteilen ist hier so groß, dass der lokal über die Primärluft zur Verfügung stehende Sauerstoff nicht ausreicht um eine vollständige Oxidation unmittelbar im und oberhalb des Brennbettes zu gewährleisten. Der vollständige Gasausbrand erfolgt dann in einer nachgeschalteten Abgasausbrandzone (vgl. **19** in **Fig.3**) unter Sekundärgaseindüsung (vgl. **20** in **Fig.3**).

Über die gesamte Rostlänge, insbesondere aber nach der vorgenannten Hauptverbrennungszone des Brennbettes fällt die Kohlenstoffkonzentration **12** im Brennbett kontinuierlich ab und nähert sich asymptotisch gegen 0. In realen Anlagen werden üblicherweise TOC-Gehalte (TOC: gesamter organischer Kohlenstoffgehalt) von ca. 1% erreicht. Ab Festbettausbrandzone **P₃** erfolgt dabei im Wesentlichen der Ausbrand des fixen Kohlenstoffes (Restkohlenstoff). In der - Festbettausbrandzone **P₄** sinken dabei die gemessenen Temperaturen signifikant, was darauf zurückzuführen ist, dass der zugeführte Primärluftüberschuss in dieser Festbettausbrandzone im Vergleich zum Restkohlenstoffgehalt im Brennbett zu einem hohen überstöchiometrischen Verhältnis führt. Die Sauerstoffkonzentration **13** steigt auf ca. 18 %.

Dieser Überschuss an Primärgas in Festbettausbrandzone **P₄** bewirkt eine Kühlung des Brennbetts und vermindert damit die Geschwindigkeit des Abbrandes des fixen Kohlestoffs, und verhindert dadurch gerade in diesem Bereich eine gute Sinterung der Asche- und Schlackebestandteile und ist damit unerwünscht. Eine Drosselung der Primärgaszufuhr in dieser Festbettausbrandzone ist nur begrenzt möglich, da durch die Inhomogenität, insbesondere die inhomogene Verteilung der Porosität der Schlacke-Ascheschicht die lokalen Strömungswiderstände nicht konstant über der Brennbettfläche verteilt sind und somit eine Strähnenbildung begünstigt wird. Das Primärgas sucht den Weg des geringsten Widerstandes mit der Folge einer inhomogenen Durchströmung der Asche-Schlackeschicht (Brennbett). Ein guter homogener Kohlenstoffausbrand der gesamten Schlacke/Aschebereiche erfordert aber eine möglichst homogene Durchströmung der Asche-Schlackeschicht mit sauerstoffhaltigem Gas bei hoher Temperatur.

**Fig.3** zeigt eine zweistufige Verbrennungsanlage der eingangs genannten Art, jedoch mit einer schematisch dargestellten Umlenkung von Verbrennungsgasanteilen durch die letzte Festbettausbrandzone als Lösung für die vorgenannt gestellte Aufgabe. Die Anlage besteht im Wesentlichen aus einem Brennbett **14** auf einem Verbrennungsrost **1** in einer Brennkammer **15** mit einen Einlass **16** für Brennstoff, einem Auslass **17** (vgl. Brennstofftransportrichtung **18** in **Fig.1**) für Schlacke oder andere festen Verbrennungsprodukte sowie einer der Brennkammer nachgeschalteten Abgasausbrandzone **19** im Abgasabzug. Die Brennkammer **15** überdeckt alle Festbettausbrandzonen **P₁** bis **P₄,** die vom Brennstoff im Brennbett seriell durchlaufen werden. Die Festbettausbrandzonen **P₁** bis **P₃** werden jeweils durch den Verbrennungsrost mit einer individuellen sauerstoffhaltigen Primärgaszufuhr **7** pro Festbettausbrandzone durchströmt, während in der vorliegenden Ausführungsform im Festbettausbrandzone **P₄** keine Primärgasdurchströmung des Brennbettes erfolgt. Eine sauerstoffhaltige Sekundärgaseindüsung **20** findet in der nachgeschalteten Abgasausbrandzone **19** im Abgasabzug statt.

Der Ort der Verbrennung **21** des festen Brennstoffes (in **Fig.3** nur mit einer symbolischen Flamme dargestellt) findet hauptsächlich im Bereich der Festbettausbrandzone **P₂** statt, wobei in den Festbettausbrandzonen **P₁** bis **P₄** naturgemäß unterschiedliche, insbesondere auf den Verbrennungsfortschritt und der Temperatur des Brennstoffs zurückzuführende Verbrennungszustände bestehen (vgl. **Fig.2**).

Eine gute Schlackequalität charakterisiert sich durch geringe Konzentrationen an Restkohlenstoff (TOC) und Chlorid sowie an organischen Schadstoffen (z.B. PCDD/F). Dies wird durch eine ausreichend lange Verweilzeit der Schlacke bei hohen Temperaturen in der zweiten Rosthälfte (im Beispiel: Festbettausbrandzonen **P₃** und **P₄**), vor allem in der letzen Festbettausbrandzone **P₄** sichergestellt. Dabei sind jedoch Brennbetttemperaturen über 1000°C, bevorzugt größer 1100°C, (die Schlackeschmelztemperatur) zu vermeiden, da dies zur Beschädigung oder Zerstörung des Rostes führen kann.
Eine Einstellung der gewünschten Temperaturen im Brennbett der Festbettausbrandzone **P₄** erfolgt vorzugsweise über eine Regelung der durchströmenden (d.h. angesaugten) Brenngasmenge oder über einen zeitlichen Wechsel (z.B. periodisch) von Saugbetrieb (Brenngasdurchströmung) oder Primärgaszufuhr (Primärgasdurchströmung).
Zur Sicherstellung eines guten Sinterergebnisses ist eine Mindesttemperatur von 600°C, gemessen im Verbrennungsrost der letzten (oder der vorgenannten nachfolgenden) Festbettausbrandzone) bei Verweilzeiten des Brennbettes größer 10 Minuten erforderlich. Die überschreitende Sintertemperatur liegt üblicherweise bei mindestens 60 bis 70% der Schlackeschmelztemperatur in °C. Bevorzugt liegt die Brennbetttemperatur im Festbettausbrandzone **P₄** bei 800°C bis maximal 1000°C an der Oberfläche der Schlackeschicht, bevorzugt gemessen mit einem Strahlungspyrometer.
Lange Verweilzeiten der Schlacke bei der Sinterung im letzen Festbettausbrandzone **P₄** werden durch geringe Rostgeschwindigkeiten eingestellt. Die resultierende auflaufende hohe Schlackeschicht weist infolge einer schlechten Vermischung einen ausgeprägten Temperaturgradienten auf. Wenn diese Festbettausbrandzone von unten mit kaltem Primärgas angeströmt wird kühlt das Schlackebett stark ab und es findet in diesem Bereich nur noch ein sehr geringer Kohlenstoffausbrand statt.
Das vorgenannte Temperaturniveau zwischen Sinter- und Schmelztemperatur, bevorzugt zwischen 800 und 1000°C erzielt man dadurch, indem Brenngase aus der Brennkammer abgezweigt und bevorzugt auf möglichst kurzen Wege für die Durchströmung des Brennbetts auf der Festbettausbrandzone **P₄** umgeleitet werden. Die Brenngase aus der Brennkammer werden dabei bevorzugt mit einem Temperaturniveau (vgl. **Fig.2****,** von z.B. ca. 900°C Temperaturverlauf **10**), d.h. im Bereich über dem Festbettausbrandzone **P₂** und **P₃** abgezweigt und direkt, von oben nach unten durch das Brennbett im Festbettausbrandzone **P₄** geleitet. Auf diese Weise erfolgt eine vollständige vertikale Durchströmung des Brennbetts mit den Schlackebestandteilen in Festbettausbrandzone **P₄** und damit zu einer Aufheizung aller Schlackebestandteile im Brennbett (vgl. **Fig.2****,** ca. 500-700°C, Temperaturverlauf **11**) auf eine Temperatur über der Sintertemperatur, vorzugsweise über 800°C. Die in Festbettausbrandzone **P₄** durch den Verbrennungsrost **1** durchströmenden Brenngase werden anschließend der Primärgaszufuhr **7** zugeführt oder oberhalb des Verbrennungsrostes wieder der Brennkammer zugeführt, wodurch ein Rezyklierkreislauf **22** für die heißen Brenngase entsteht.
Da das rezyklierte Gas aus **P4** noch einen erheblichen Sauerstoffgehalt aufweist kommt es zur teilweisen Nachverbrennung der heizwertreichen Brenngase aus **P2.** Dies hat einen Anstieg der Temperaturen in der Brennkammer zur Folge (vgl. **Fig.4a**). Durch das sich einstellende höhere Temperaturniveau der Brenngase erhöht sich die Temperatur im Brennbett des Festbettausbrandzone **P₄** ebenfalls.
Wesentlich ist auch, dass das Brenngas oder Abgas eine für den Restkohlenstoffabbrand des Brennbetts in Festbettausbrandzone **P₄** ausreichende Sauerstoffmenge aufweist.
Bevorzugt erfolgt die Rezyklierung der Brenngase von oben nach unten durch das Brennbett mittels eines Umwälzmittels, bevorzugt eines Injektors oder eines Heißgasgebläses, vorzugsweise als Saugvorrichtung unterhalb des Verbrennungsrostes **1** in der letzten Rostzone angeordnet. Dabei gibt das Brenngas in vorteilhafter Weise ein Großteil der Wärme an das Brennbett ab. Infolge von Wärmeverlusten und durch eventuelle Zumischung von geringen Mengen an kaltem Gas (vorzugsweise Luft) unterhalb des Verbrennungsrostes der Zone 4 werden die temperatursensibleren beweglichen Anlagenteile (Verbrennungsrost, Umwälzmittel) geschont. Die abgesaugte Brenngasmenge (oder Abgasmenge mit Sauerstoffanteilen) wird entsprechend der maximal zulässigen Rosttemperatur (und vorgenannte Schmelztemperatur der Schlacke) begrenzt. Unterhalb des Verbrennungsrostes wird im Abgas der O₂ und CO Gehalt gemessen. Zündfähige Gemische (CO =12.5-74 Vol. % in Luft, Zündtemperatur T= 620°C) sind sehr unwahrscheinlich. Bei Unterschreitung einer Mindest O₂ Konzentration (ca. 10 Vol. %) und Überschreitung einer maximalen CO-Konzentration (ca.1 Vol.%) wird die Primärluft in der vorgelagerten Festbettausbrandzone **P₃** erhöht.

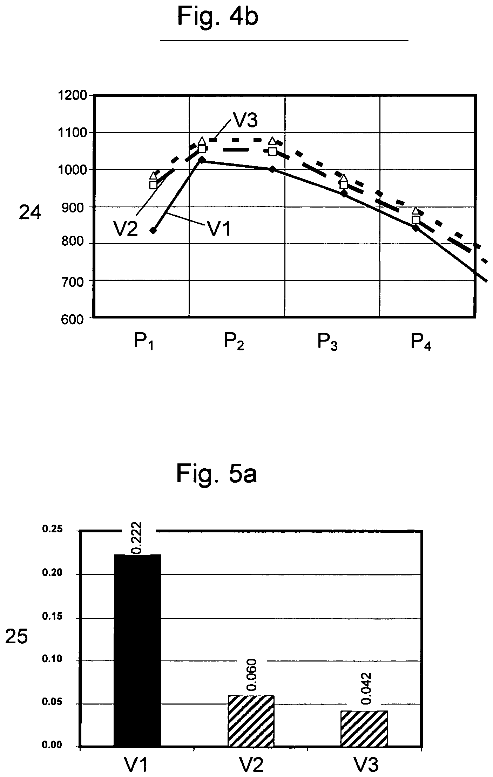

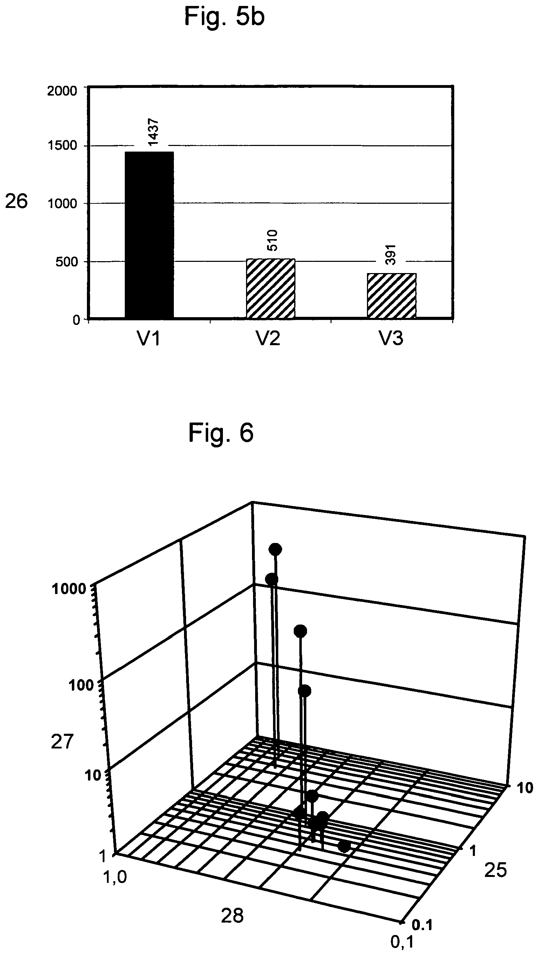

**Fig.4a** **und b** zeigen die in drei Versuchen (**V1, V2, V3**) an einer Müllverbrennungsanlage (TAMARA des Forschungszentrum Karlsruhe) mit Rostfeuerung ermittelten Rosttemperaturen **23** (**Fig.4a**) und Rauchgastemperaturen **24** (Brenngastemperaturen in der Brennkammer, **Fig.4b**) über die vorgenannten vier Festbettausbrandzonen, aufgetragen über die Festbettausbrandzonen. **Fig.5a** **und b** geben TOC-Konzentrationen **25** in % (vgl. **Fig.5a**) und Chloridgehalte **26** in mg/kg (vgl. **Fig.5b**) in der Schlacke (trockene Beprobung) über die vorgenanten drei Versuche wieder. Dabei erfolgte eine Absaugung des rezyklierten Brenngases mittels eines Injektors durch das Brennbett in der letzen Festbettausbrandzone sowie eine Rückführung des rezyklierten Brenngases in die Brennkammer über der Festbettausbrandzone **P₂.**

Der Versuch **V1** diente als Referenzversuch ohne eine rezyklierung von Brenngas gemäß der Erfindung. Die Festbettausbrandzonen **P₁ bis P₄** wurden dabei mit 50/100/100/50 m³/h Primärgas durchströmt. Die entsprechenden über den Rostantrieb eingestellten Brennstoffverweilzeiten in den einzelnen Festbettausbrandzonen **P₁ bis P₄** betrugen 300/300/600/1200 s.

Die Versuche **V2** und **V3** erfolgten dagegen mit vorgenannter Absaugung von zu rezyklierendem Brenngas (ca. 35m³/h) von oben nach unten durch das Brennbett in der Festbettausbrandzone **P₄.** Leckagen führten in der Primärgaszuführung jedoch zu einer, wenn auch verminderten Primärgaszufuhr ca. 15 m³/h in der Festbettausbrandzone **P₄,** was sich kühlend, d.h. günstig auf die Temperatur unterhalb des Verbrennungsrostes und das Absaugmittel (Injektor) auswirkt, d.h. die dort befindlichen mechanischen Komponenten schont. Die im abgesaugten Rauchgas unter dem Verbrennungsrost gemessenen Temperaturen steigen im vergleich zu **V1** von 240 auf 460°C. Die vorgenannten Mindest O₂ Konzentration direkt unterhalb des Verbrennungsrostes von **p4** lagen bei ca. 17.8 Vol.%, die maximalen CO-Konzentration bei 0.12 Vol.%. Die axialen Temperaturprofile im Verbrennungsrost und im Abgas oberhalb des Brennbettes wurden am Rostende um ca. 100 - 150°C erhöht (vgl. **Fig.4a** **und b**). Signifikant ist die im Vergleich zu **V1** reduzierten der TOC-Konzentrationen (vgl. **Fig.5a**) und Chloridgehalte (vgl. **Fig.5b**) um Faktoren von 4 bzw. 3, was in vorteilhafter Weise in eine niedrige PCDD/F Konzentration in der Schlacke einmündet. **Fig.6** zeigt hierzu die entsprechenden gemessenen Toxizitätsäquivalente **27** in ng/kg (TEq) der im Rahmen der Versuche gewonnenen Schlacke (Chlorid-Konzentration (in %) **28** und der TOC-Konzentration (in %) **25**).

Negative Effekte des Verfahrens auf den Verbrennungsprozess und die Bildung von Schadstoffen konnten nicht festgestellt werden. Die Bildung von NOₓ wurde sogar um ca. 20% gemindert.

### Bezugszeichenliste

- 1: Verbrennungsrost
- 2: Trocknung
- 3: Entgasung
- 4: Abbrand
- 5: Sinterung der Rostasche
- 6: Rostlänge
- 7: Primärgaszufuhr
- 8: Temperaturverlauf (°C)
- 9: Konzentration
- 10: Temperatur oberhalb des Brennbetts
- 11: Temperatur direkt auf der Rostoberfläche
- 12: Kohlenstoffabbrand (%)
- 13: Sauerstoffkonzentration oberhalb des Brennbetts
- 14: Brennbett
- 15: Brennkammer
- 16: Einlass
- 17: Auslass
- 18: Brennstofftransportrichtung
- 19: Abgasausbrandzone
- 20: Sekundärgaseindüsung
- 21: Verbrennung
- 22: Rezyklierkreislauf
- 23: Rosttemperatur (°C)
- 24: Rauchgastemperatur (°C)
- 25: TOC-Konzentration (%)
- 26: Chlorid-Konzentration in ppm
- 27: PCDD/F Toxizitätsäquivalent TEq (ng/kg)
- 28: Chlorid-Konzentration in %

## Patentansprüche

1. Verfahren zur Verbesserung der Schlackequalität von Rostfeuerungsanlagen, umfassend
a) ein Brennbett (**14**)
b) mit mehreren hintereinander angeordneten Festbettausbrandzonen (**P₁** bis **P₄**)
c) auf einem Verbrennungsrost (**1**) und
d) einer darüber angeordneten Brennkammer (**15**),
wobei
e) die ersten Festbettausbrandzonen (**P₁** bis **P₃**) von einem sauerstoffhaltigen Primärgas (**7**) durchströmt und
f) das Brennbett mindestens eine den ersten Festbettausbrandzonen (**P₁** bis **P₃**) nachfolgenden Festbettausbrandzone (**P₄**) permanent oder im zeitlichen Wechsel
g) mit einem heißen Brenngas durchströmt wird,
**dadurch gekennzeichnet, dass**
h) die nachfolgenden Festbettausbrandzone (**P₄**) mit dem heißen Brenngas direkt aus der Brennkammer (**5**) und nicht mit Primärgas (**7**) durchströmt wird sowie
i) das Brenngas das Brennbett in der nachfolgenden Festbettausbrandzone (**P₄**) von oben nach unten durchströmt.

2. Verfahren nach Anspruch 1, **dadurch gekennzeichnet, dass** die nachfolgende Festbettausbrandzone (**P₄**) die letzte Festbettausbrandzone umfasst.

3. Verfahren nach einem der vorgenannten Ansprüche, **dadurch gekennzeichnet, dass** das Durchströmen der nachfolgenden Festbettausbrandzone (**P₄**) permanent oder zur Vermeidung einer Überschreitung einer maximalen Brennbetttemperatur und/oder einer maximalen Rosttemperatur in einem zeitlichen Wechsel von heißer Brenngasdurchströmung oder Primärgaszufuhr (**7**) erfolgt.

4. Verfahren nach einem der vorgenannten Ansprüche, **dadurch gekennzeichnet, dass** das durch die nachfolgende Festbettausbrandzone (**P₄**) geleitete Brenngas in der Brennkammer (**15**) oberhalb des Brennbettes (**14**) im Bereich vor der nachfolgenden Festbettausbrandzone (**P₄**) rezykliert wird.

5. Verfahren nach einem der vorgenannten Ansprüche 1 bis 4, **dadurch gekennzeichnet, dass** das aus der Brennkammer (**15**) angesaugte Brenngas einem oder mehreren Primärgasströmen (**7**) der vorgelagerten ersten Festbettausbrandzonen (**P₁** bis **P₃**) beigemischt und mit diesem gemeinsam von unten nach oben durch das Brennbett (**14**) geleitet wird.

6. Verfahren nach einem der vorgenannten Ansprüche, **dadurch gekennzeichnet, dass** das heiße Brenngas mit Hilfe von Ansaugmitteln durch das Brennbett (**14**) der nachfolgenden Festbettausbrandzone (**P₄**) gesaugt wird.

7. Verfahren nach einem der vorgenannten Ansprüche, **dadurch gekennzeichnet, dass** unterhalb des Verbrennungsrostes (**1**) eine Kühlluftanströmung vorgesehen ist.

8. Verfahren nach einem der vorgenannten Ansprüche, **dadurch gekennzeichnet, dass** sich im Festbett im Bereich der nachfolgenden Festbettausbrandzone (**P₄**) eine Temperatur zwischen 600°C und der Schmelztemperatur der Schlacke einstellt.

9. Verfahren nach Anspruch 8, **dadurch gekennzeichnet, dass** sich auf der Brennbettoberfläche des Brennbettes (**14**) im Bereich der nachfolgenden Festbettausbrandzone (**P₄**) eine mittels Pyrometer gemessene Temperatur zwischen 800 und 1000°C einstellt.

10. Verfahren nach einem der vorgenannten Ansprüche, **dadurch gekennzeichnet, dass** im rezyklierten Brenngas unmittelbar unter dem Verbrennungsrost (**1**) der nachfolgenden Festbettausbrandzone (**P₄**) eine Sauerstoffgehalts-, eine Kohlenmonoxidgehalts- und/oder eine Temperaturmessung erfolgt, wobei bei einer Unterschreitung einer Mindestsauerstoffkonzentration und/oder Überschreitung einer Maximalkohlenstoffmonoxidkonzentration eine Erhöhung der Primärgaszufuhr (**7**) in den der nachfolgenden Festbettausbrandzone (**P₄**) vorangegangenen Festbettausbrandzonen (**P₂** und **P₃**) erfolgt.

11. Verfahren nach Anspruch 10, **dadurch gekennzeichnet, dass** die Mindestsauerstoffkonzentration bei 10 Vol.% und die Maximalkohlenstoffmonoxidkonzentration 1 Vol.%, beträgt.

## Claims

1. Method for the improvement of the slag quality in grate furnaces, comprising:
a) a combustion bed (14)
b) with several consecutive fixed-bed burn-out zones (P₁ to P₄)
c) on one combustion grate (1) and
d) a combustion chamber (15) arranged above that,
wherein
e) a primary gas (7) containing oxygen permeates the first fixed-bed burn-out zones (P₁ to P₃), and
f) the combustion bed, at least at one fixed-bed burn-out zone (P₄) following the first fixed-bed burn-out zones (P₁ to P₃), is permanently or temporally alternating
g) permeated by a hot combustion gas,
**characterised in that**
h) the following fixed-bed burn-out zone (P₄) is permeated by the hot gas directly out of the combustion chamber (5) and not by primary gas (7), and
i) the combustion gas permeates the combustion bed in the following fixed-bed burn-out zone (P₄) from the top to the bottom.

2. Method according to claim 1, **characterised in that** the following fixed-bed burn-out zone (P₄) comprises the last fixed-bed burn-out zone.

3. Method according to any one of the preceding claims, **characterised in that** the permeation of the following fixed-bed burn-out zone (P₄) takes place permanently or, in order to avoid an exceeding of a maximum combustion bed temperature and/or a maximum grate temperature, at temporally alternating hot gas permeation or primary gas delivery (7).

4. Method according to any one of the preceding claims, **characterised in that** the combustion gas conveyed through the following fixed-bed burn-out zone (P₄) is recycled in the combustion chamber (15) above the combustion bed (14) in the region of the following fixed-bed burn-out zone (P₄).

5. Method according to any one of the preceding claims 1 to 4, **characterised in that** the combustion gas suctioned out of the combustion chamber (15) is mixed with one or more primary gas flows (7) from the preceding first fixed-bed burn-out zones (P₁ to P₃), and is conveyed together with this from bottom to top through the combustion bed (14).

6. Method according to any one of the preceding claims, **characterised in that** the hot combustion gas is suctioned with the aid of suction means through the combustion bed (14) of the following fixed-bed burn-out zone (P₄).

7. Method according to any one of the preceding claims, **characterised in that** a cooling air flow arrangement is provided beneath the combustion grate (1).

8. Method according to any one of the preceding claims, **characterised in that** a temperature is set in the fixed bed, in the region of the following fixed-bed burn-out zone (P₄), of between 600 °C and the melt temperature of the slag.

9. Method according to claim 8, **characterised in that** on the combustion bed surface of the combustion bed (14), in the region of the following fixed-bed burn-out zone (P₄), a temperature is set of between 800 and 1000 °C.

10. Method according to any one of the preceding claims, **characterised in that** a measurement takes place in the recycled combustion gas of the oxygen content, carbon monoxide content, and/or temperature, immediately beneath the combustion grate (1) of the following fixed-bed burn-out zone (P₄), wherein, in the event of a shortfall below a minimum oxygen concentration and/or the exceeding of a maximum carbon monoxide concentration, an increase takes place in the primary gas delivery (7) in the fixed-bed burn-out zones (P₂ and P₃) preceding the following fixed-bed burn-out zone (P₄).

11. Method according to claim 10, **characterised in that** the minimum oxygen concentration is 10% by volume and the maximum carbon monoxide concentration is 1% by volume.

## Revendications

1. Procédé pour améliorer la qualité des scories d'installation de fours à grille comprenant :
a) un lit de combustible (14),
b) plusieurs zones de combustion en lit fixe installées l'une derrière l'autre (P₁-P₄),
c) sur une grille de combustion (1), et
d) surmontée d'une chambre de combustion (15),
selon lequel
e) les premières zones de combustion en lit fixe (P₁-P₃) sont traversées par un gaz primaire (7) contenant de l'oxygène, et
f) le lit de combustible a au moins une zone de combustion en lit fixe (P₄) en aval de l'une des premières zones de combustion en lit fixe (P₁-P₃), de façon permanente ou en alternance dans le temps,
g) est traversée par un gaz de combustion chaud,
**caractérisé en ce que**
h) la zone de combustion en lit fixe en aval (P₄) est traversée par le gaz de combustion directement de la chambre de combustion (5) et non par le gaz primaire (7), et
i) le gaz de combustion traverse le lit de combustible de la zone de combustion en lit fixe en aval (P₄) en passant de haut vers le bas.

2. Procédé selon la revendication 1,
**caractérisé en ce que**
la zone de combustion en lit fixe en aval (P₄), est la dernière zone de combustion en lit fixe.

3. Procédé selon l'une des revendications précédentes,
**caractérisé en ce que**
le passage à travers la zone de combustion en lit fixe en aval, (P₄), est permanent ou pour éviter de dépasser une température maximale du lit de combustion et/ou une température maximale de la grille, il se fait en alternance dans le temps entre un passage de gaz de combustion chaud et une alimentation en gaz primaire (7).

4. Procédé selon l'une des revendications précédentes,
**caractérisé en ce que**
le gaz de combustion traversant la zone de combustion en lit fixe en aval (P₄) est recyclé dans la chambre de combustion (15) au-dessus du lit de combustible (14) dans la zone devant la zone de combustion en lit fixe en aval (P₄).

5. Procédé selon l'une des revendications 1 à 4,
**caractérisé en ce que**
le gaz de combustion aspiré dans la chambre de combustion (15) est mélangé à un ou plusieurs flux de gaz primaire (7) des premières zones de combustion en lit fixe en amont (P₁-P₃) et il est conduit en commun avec ceux-ci de bas en haut à travers le lit de combustible (14).

6. Procédé selon l'une des revendications précédentes,
**caractérisé en ce que**
le gaz de combustion chaud est aspiré par des moyens d'aspiration à travers le lit de combustible (14) de la zone de combustion en lit fixe en aval (P₄).

7. Procédé selon l'une des revendications précédentes,
**caractérisé en ce qu'**
une arrivée d'air de refroidissement est faite en-dessous de la grille de combustion (1).

8. Procédé selon l'une des revendications précédentes,
**caractérisé en ce que**
dans le lit fixe, dans la région de la zone de combustion en lit fixe en aval (P₄) il s'établit une température comprise entre 600°C et la température de fusion des scories.

9. Procédé selon la revendication 8,
**caractérisé en ce qu'**
à la surface du lit de combustible (14) au niveau de la zone de combustion en lit fixe en aval (P₄) s'établit une température comprise entre 800 et 1000°C mesurée avec un pyromètre.

10. Procédé selon l'une des revendications précédentes,
**caractérisé en ce qu'**
on effectue une mesure de la teneur en oxygène, une mesure de la teneur en monoxyde de carbone et/ou une mesure de température dans les gaz de combustion recyclés, directement en-dessous de la grille de combustion (1) de la zone de combustion en lit fixe en aval (P₄) et en cas de dépassement en-dessous d'une concentration minimale en oxygène et/ou d'un dépassement au-dessus d'une concentration maximale en monoxyde de carbone, on augmente l'alimentation en gaz primaire (7) dans les zones de combustion en lit fixe en aval (P₂ et P₃) qui sont en amont de la zone de combustion en lit fixe (P₄).

11. Procédé selon la revendication 10,
**caractérisé en ce que**
la concentration minimale en oxygène se situe à 10% Vol et la concentration maximale en monoxyde de carbone se situe à 1% Vol.
